# EUROPEAN PATENT APPLICATION

(11) **EP 1 729 220 A1**
(43) Date of publication of application: **06.12.2006**
(21) Application number: 05720927.2
(22) Date of filing: 16.03.2005
(51) Int. Cl.: G06F 12/08

(54) **CACHE MEMORY AND CONTROL METHOD THEREOF**

(30) Priority: 24.03.2004 JP 2004086174
(71) Applicant: MATSUSHITA ELECTRIC INDUSTRIAL CO., LTD., Osaka 571-8501 (JP)
(72) Inventor: NAKANISHI, Ryuta Mat. Elec. Ind. Co., Ltd., IPROC, Chuo-ku, Osaka-shi, Osaka 540-6319 (JP); OKABAYASHI, Hazuki Mat. Elec. Ind. Co., Ltd., Chuo-ku, Osaka-shi, Osaka 540-6319 (JP); TANAKA, Tetsuya Mat. Elec. Ind. Co., Ltd., IPROC, Chuo-ku, Osaka-shi, Osaka 540-6319 (JP); KIYOHARA, Tokuzo Mat. Elec. Ind. Co., Ltd., IPROC, Chuo-ku, Osaka-shi, Osaka 540-6319 (JP)
(74) Representative: Pautex Schneider, Nicole Véronique
(86) International application number: PCT/JP2005/004676
(87) International publication number: WO 2005/091146

(57) **Abstract**

The cache memory in the present invention includes a prediction unit 39 which predicts, based on the progress of the memory access outputted from the memory, a line address which should be prefetched next. The prediction unit 39 includes: a prefetch unit 414 which prefetches data of the predicted line data, from the memory to the cache memory; and a touch unit 415 which sets the predicted line address to the cache entry, as a tag, and validates the valid flag, without loading data from the memory into the cache memory.

## Description

### Technical Field

The present invention relates to a cache memory for facilitating high-speed memory access from a processor, and a control method thereof.

### Background Art

In recent microprocessors, high-speed memory access from a microprocessor is facilitated by placing a low capacity, high-speed cache memory, which is configured from an SRAM (Static Random Access Memory) for example, inside or near the microprocessor, and storing a part of data in the cache memory.

Preloading (or prefetching) exists as technology for previously filling soon-to-be used data into the cache before a cache miss occurs in order to improve cache efficiency (for example, patent reference 1).

In the conventional prefetching technology, the line which corresponds to the address specified by a prefetch instruction is loaded into the cache. With this, cache misses are reduced.
Patent Reference 1: Japanese Laid Open Patent Application No. 7-295882 Publication

### Disclosure of Invention

### Problems that Invention is to Solve

However, in the above conventional technology, for example, in the case where prefetching is performed using software, all at once outside a loop, the data area needed for the loop are all reserved in the cache. Therefore, in the case where the capacity of the cache is low, other necessary data are evicted from the cache and a cache miss occurs. Moreover, in the case where data caching conclusion, data invalidation, and the like are performed all at once outside a loop, the releasing of the cache in such processes is not carried out until the loop is exited and thus, the capacity of the cache becomes insufficient and a cache miss occurs.

Furthermore, when an instruction to perform cache manipulation is inserted within a loop through software, the address on which the cache manipulation is to be performed needs to be managed, through software, within the loop. In other words, since an instruction to perform cache manipulation needs to be described within the loop, deterioration of performance arises.

In addition, in the case where the memory access history is monitored through hardware and a cache manipulation is performed automatically by hardware, unnecessary transferring takes place when accurate prediction cannot be carried out, and alternatively, consistency between data in the cache and data in an external memory cannot be attained when accurate information from software is not available. Therefore, it is difficult to perform such manipulations according to prediction by hardware.

### Means to Solve the Problems

The object of the present invention is to provide a cache memory system in which, based on pre-set information from the processor, hardware is used to perform manipulation of the cache at an appropriate timing, while monitoring and maintaining synchronization with the state of the processor's program operation.

In order to achieve the aforementioned objective, the cache memory system of the present invention is a cache memory system including: a condition generation unit which generates a condition concerning a state of a processor; a judgment unit which judges whether or not a current state of the processor satisfies the condition; an address generation unit which generates an address to be manipulated; and a manipulation unit which manipulates a cache using the address generated by said address generation unit, when said judgment unit judges that the condition is satisfied.

Here, it is also possible that said condition generation unit generates a new condition in the case where said judgment unit judges that the condition is satisfied.

According to this structure, since the cache is manipulated when the state of the processor's operation satisfies the condition, it is possible to manipulate the cache memory in synchronization with the progress of the processor's operation. Furthermore, since this is not realized through software, the cache memory can be made to operate efficiently and without causing performance deterioration, without burden to the processor.

Here, it is also possible that said condition generation unit generates a condition concerning a value of a specific register, within the processor. It is also possible that the specific register is a program counter.

According to this structure, it is possible to monitor the state of the processor, with a memory access address and a program fetch address as the condition.

Here, it is also possible that said condition generation unit generates, as the condition, one of memory access within a specific address range and memory access outside of the specific address range.

Furthermore, it is also possible that said condition generation unit generates, as the condition, execution of a specific instruction by the processor.

Here, it is also possible that said condition generation unit generates the new condition by performing a specific calculation on a current condition.

Furthermore, it is also possible that said condition generation unit generates a memory access address as the condition, and generates the new condition by adding a constant to the current condition in the case where said judgment unit judges that the condition is satisfied.

Here, it is also possible that the constant is one of: an increment value or decrement value in a post-increment load/store instruction executed by the processor; and a difference value of addresses in two load/store instructions executed by the processor.

Here, it is also possible that said condition generation unit generates plural conditions, and said judgment unit judges whether or not all of the plural conditions are satisfied.

Furthermore, it is also possible to have said condition generation unit generate plural conditions, and said judgment unit judge whether or not any of the plural conditions are satisfied.

Here, it is also possible that said manipulation unit includes: a data judgment unit which, in the case where said judgment unit judges that the condition is satisfied, judges whether or not data corresponding to the address generated by said address generation unit is stored in the cache; a selection unit which selects a line within the cache memory in the case where it is judged that the data is not stored; a write back unit which performs a write back from the selected line when the selected line is valid and dirty; a transfer unit which transfers, from a memory to the selected line after the write back, the data corresponding to the address; and a registration unit which registers the address as a tag, to the selected line.

According to this structure, it is possible to perform cache memory prefetching at an appropriate timing while monitoring and maintaining synchronization with the state of the processor's operation.

Here, it is also possible that said manipulation unit includes: a data judgment unit which, in the case where said judgment unit judges that the condition is satisfied, judges whether or not data corresponding to the address generated by said address generation unit is stored in the cache; a selection unit which selects a line within the cache memory in the case where it is judged that the data is not stored; a write back unit which performs a write back from the selected line when the selected line is valid and dirty; a registration unit which registers the generated address as a tag, to the selected line, without transferring data from a memory to the selected line.

According to this structure, it is possible to perform the reservation of a line in the cache memory without transferring data to the line (referred to as Touch) at an appropriate timing while monitoring and maintaining synchronization with the state of the processor's operation.

Here, it is also possible that said manipulation unit includes: a data judgment unit which, in the case where said judgment unit judges that the condition is satisfied, judges whether or not data corresponding to the address generated by said address generation unit is stored in the cache; a selection unit which, in the case where it is judged that the data is stored, selects a line, within the cache memory, in which the data is stored; a write back unit which performs a write back from the selected line when the selected line is valid and dirty.

According to this structure, it is possible to perform the write back of line data of the cache memory (conclusion of caching) at an appropriate timing while monitoring and maintaining synchronization with the state of the processor's operation.

Here, it is also possible that said manipulation unit includes: a data judgment unit which, in the case where said judgment unit judges that the condition is satisfied, judges whether or not data corresponding to the address generated by said address generation unit is stored in the cache; a selection unit which, in the case where it is judged that the data is stored, selects a line, within the cache memory, in which the data is stored; an invalidation unit which invalidates the selected line.

According to this structure, it is possible to perform the invalidation of a line of the cache memory at an appropriate timing while monitoring and maintaining synchronization with the state of the processor's operation.

Here, it is also possible that said manipulation unit includes: a data judgment unit which, in the case where said judgment unit judges that the condition is satisfied, judges whether or not data corresponding to the address generated by said address generation unit is stored in the cache; a selection unit which, in the case where it is judged that the data is stored, selects a line, within the cache memory, in which the data is stored; a change unit which changes an access order of the selected line in order information indicating an order in which lines are accessed.

According to this structure, it is possible to monitor the state of the processor's operation and change the access order information of a line of the cache memory at an appropriate timing while maintaining synchronization. Accordingly, it is possible to raise or lower the replacement order of a cache through the so-called LRU.

Here, it is also possible that said condition generation unit generates a memory address as the condition, and said manipulation unit further includes an adjustment unit which, in the case where the memory address generated by said condition generation unit indicates a point midway through a line, generates an address by adjusting so that one of a starting point of the line, a starting point of a next line, and a starting point of an immediately preceding line is indicated.

According to this structure, it is possible to properly derive the next required address, even when the processor accesses in an ascending address order or a descending address order.

Furthermore, the cache memory control method in the present invention has the same means and effects as mentioned above.

According to the cache memory in the present invention, it is possible to manipulate the cache memory in synchronization with the progress of the processor's operation. Furthermore, since this is not realized through software, the cache memory can be made to operate efficiently and without causing performance deterioration, without burden to the processor.

For example, in the case where the processor performs a memory access sequentially according to a post-increment load instruction, prefetching can be performed efficiently. Moreover, in the case where the processor sequentially writes data according to a post-increment store instruction, it is possible to eliminate penalties in loading data from the memory to the cache memory and, in addition, touching (reservation) of a cache entry can be performed efficiently.

Furthermore, in the case where the processor sequentially writes data according to a post-increment store instruction, a line in which storing has concluded is predicted and a caching termination attribute and an invalidation attribute is set onto the predicted line. Therefore, it is possible to predict the line to be written back, using the cache memory, and perform cleaning (write back) and cache entry releasing (invalidation) efficiently, without the processor having to be aware of the cache memory's line size and line boundaries.

In addition, in the case where the processor reads data sequentially according to a post-increment load instruction, a cache entry holding line data on which reading has concluded is set with a replacement attribute and becomes the first to be selected as a subject for replacement. Therefore, it is possible to reduce the inducement of cache misses due to seldom accessed data being left in the cache memory.

### Effects of the Invention

According to the cache memory of the present invention, it is possible to manipulate the cache memory in synchronization with the progress (condition) of the processor's operation. Furthermore, since the present invention is not implemented through software, it is possible, without any burden to the processor, to make the cache memory operate efficiently and without causing any deterioration in performance. In addition, the condition of the processor can be monitored, with a memory access address, a program fetch address, and the like, as the condition.

For example, the reservation of a line in the cache memory without transferring data (referred to as "touch") can be performed at an appropriate time, while monitoring the operation of the processor and maintaining synchronization.

Furthermore, the write back of cache memory line data (conclusion of caching) can be performed at an appropriate time, while monitoring the operation of the processor and maintaining synchronization. The invalidation of a line of the cache memory can be performed at an appropriate time, while monitoring the operation of the processor and maintaining synchronization.

In addition, the operation of the processor can be monitored, and the access order information for the lines of the cache memory can be changed at an appropriate time while maintaining synchronization. With this, it is possible to raise or lower the replacement order for the so-called LRU.

Furthermore, the address of the next required line can be appropriately derived even when the processor accesses in an ascending order of addresses or a descending order of addresses.

### Brief Description of Drawings

FIG. 1 is a block diagram showing the outline structure of the system including the processor, cache memory, and memory, in the first embodiment of the present invention.
FIG. 2 is a block diagram showing an example of the structure of the cache memory.
FIG. 3 is a block diagram showing the structure of the prediction unit.
FIG. 4(a) shows an example of an instruction for writing a start address into the start address register. FIG. 4(b) shows an example of an instruction for writing a size into the size register. FIG. 4(c) an example of an instruction for writing a command into the command register. FIG. 4(d) shows an example of a command.
FIG. 5 is an explanatory diagram for the start aligner and the end aligner.
FIG. 6(a) is an explanatory diagram for the predictive prefetching by the prefetch unit. FIG. 6(b) is an explanatory diagram for the predictive touch operation performed by the touch unit.
FIG. 7 is a flowchart showing an example of the predictive prefetching by the prefetch unit.
FIG. 8 is a flowchart showing an example of the predictive touch process performed by the prefetch unit.
FIG. 9 is a block diagram showing the structure of the cache memory in the second embodiment of the present invention.
FIG. 10 shows the bit structure of a cache entry.
FIG. 11 shows an example of use flag updating by the control unit.
FIG. 12(a) is a diagram showing the replacement of cache entries in the case where a weak flag does not exist. FIG. 12(b) is an explanatory diagram showing the role of the weak flag W in the replacement process.
FIG. 13 is a block diagram showing the structure of the prediction unit.
FIG. 14(a) is an explanatory diagram for the C flag setting by the C setting unit. FIG. 14(b) is an explanatory diagram for the W flag setting by the W setting unit.
FIG. 15 is a flowchart showing an example of the C flag setting by the C setting unit.
FIG. 16 is a flowchart showing an example of the W flag setting by the W setting unit.
FIG. 17 is a flowchart showing an example of the cleaning by the control unit.
FIG. 18 is a flowchart showing an example of the U flag updating by the control unit.
FIG. 19 is a flowchart showing an example of the replacement by the control unit.

### Numerical References

- 1: Processor
- 2: Memory
- 3: Cache memory
- 20: Address register
- 21: Memory I/F
- 30: Decoder
- 31a to 31d: Ways
- 32a to 32d: Comparators
- 33a to 33d: AND circuits
- 34: OR circuit
- 35: Selector
- 36: Selector
- 37: Demultiplexor
- 38: Control unit
- 39: Prediction unit
- 131a: Way
- 131a to 131d: Ways
- 131b to 131d: Ways
- 138: Control unit
- 139: Prediction unit
- 401: Command register
- 402: Start address register
- 403: Size register
- 404: Adding unit
- 405a, 405b: Start aligner
- 406a, 406b: End aligner
- 407: Access address register
- 408: Predicted value register
- 409: Constant register
- 410: Selector
- 411: Adding unit
- 412: Comparator
- 413: Execution unit
- 414: Prefetch unit
- 415: Touch unit
- 416: C setting unit
- 417: W setting unit

### Best Mode for Carrying Out the Invention

### (First Embodiment)

### <Overall structure>

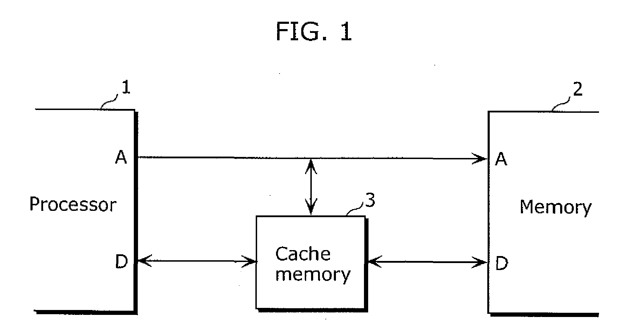

FIG. 1 is a block diagram showing the outline structure of a system including a processor 1, a cache memory 3, and a memory 2 in the first embodiment of the present invention. As shown in the diagram, the cache memory 3 in the present invention is included in a system having the processor 1 and the memory 2.

The cache memory 3 is structured to perform predictive prefetching according to a condition specified by the processor 1. Predictive prefetching refers to the prediction of the next line address to be prefetched based on the progress of the memory access by the processor 1, and the prefetching of the data of the predicted line address to the cache memory. Furthermore, the condition specified by the processor 1 is an address range, an address increment value or decrement value in the case of sequential accessing, or an accessing direction (ascending order or descending order of addresses) and the like. Predictive prefetching is suitable for use in the case where the processor performs memory access sequentially.

In addition, the cache memory 3 is structured to perform predictive touch according to the condition specified by the processor 1. Predictive touch refers to the prediction of the next line address to be touched based on the progress of the memory access by the processor 1, and the reservation of a set cache entry, without loading the data of the predicted line address, by setting a valid flag and a tag in the set cache entry. Predictive touch is suitable for use in the case where calculation results of array data and the like are sequentially stored.

### <Structure of the cache memory>

Hereinafter, the structure in the case where the present invention is applied to a 4-way set-associative cache memory shall be described as a specific example of the cache memory 3.

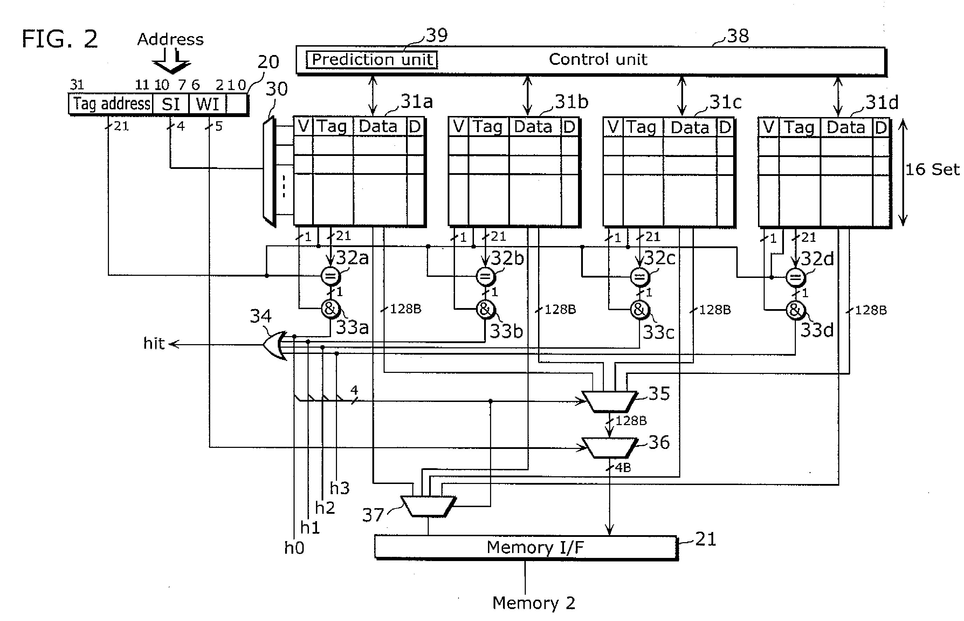

FIG. 2 is a block diagram showing an example of the structure of the cache memory 3. As in the diagram, the cache memory 3 includes an address register 20, a memory I/F 21, a decoder 30, four ways 31a to 31d (hereinafter abbreviated as ways 0 to 3), four comparators 32a to 32d, four AND circuits 33a to 33d, an OR circuit 34, selectors 35 and 36, a demultiplexor 37, and a control unit 38.

The address register 20 is a register which holds an access address to the memory 2. Such access address is assumed to be of 32 bits. As shown in the same diagram, the access address includes, in order from the most-significant bit, a 21-bit tag address, a 4-bit set index (SI in the diagram), and a 5-bit word index (WI in the diagram). Here, the tag address indicates an area (with size being, the number of sets multiplied by a block) within the memory which is mapped by a way. The size of this area is the size defined by address bits (A10 to A0) which are lower than the tag address, in other words, 2k bytes, and is also the size of one way. The set index (SI) indicates one of a plurality of sets which straddle the ways 0 to 3. As the set index is 4 bits, the number of sets is sixteen sets. A cache entry which is identified by the tag address and the set index is the unit for replacement, and is referred to as line data or a line when stored in the cache memory. The size of line data is the size defined by the address bits lower than the set index, in other words, 128 bytes. With one word being 4 bytes, one line data is 32 bytes. The word index (WI) indicates one word within plural words making up the line data. The lowest 2 bits (A1, A0) within the address register 20 are disregarded during word accessing.

The memory I/F 21 is an I/F for accessing the memory 2 from the cache memory 3 such as in writing back data from the cache memory 3 to the memory 2, and loading data from the memory 2 to the cache memory 3.

The decoder 30 decodes the 4 bits of the set index, and selects one set among the sixteen sets spanning the four ways 0 to 3.

The four ways 0 to 3 are four ways having the same structure and a capacity of 4x2k bytes. Each way includes sixteen cache entries. A single cache entry includes a valid flag V, a 21-bit tag, 128-byte line data, and a dirty flag D. A tag is a copy of a 21-bit tag address. Line data is a copy of 128-byte data within a block identified by a tag address and a set index. The valid flag V indicates whether or not data of the cache entry is valid. The dirty flag D indicates whether or not the cache entry has been written into by the processor. In other words, it indicates whether or not writing back to the memory is necessary because, although cached data is present within a sub-line, it is different from the data in the memory due to a write operation.

The comparator 32a compares whether or not the tag address within the address register 20 matches the tag of the way 0 among the four tags included in the set selected according to the set index. Aside from corresponding to the ways 31b to 31d respectively, everything else is the same for the comparators 32b to 32d.

The AND circuit 33a compares whether or not the valid flag matches the comparison result from the comparator 32a. The result of this comparison shall be assumed to be h0. In the case where the comparison result h0 is 1, this means that there exists line data corresponding to the tag address within the address register 20 and the set index, in other words, a hit has occurred in the way 0. In the case where the comparison result h0 is 0, this means that a mishit has occurred. Aside from corresponding to the ways 31b to 31d respectively, everything else is the same for the AND circuits 33b to 33d. Respective comparison results h1 to h3 represent a hit or miss occurring in the ways 1 to 3.

The OR circuit 34 carries out the OR for the comparison results h0 to h3. The result of this OR is assumed as a "hit". A "hit" indicates whether or not a hit occurs in the cache memory.

The selector 35 selects, among the line data of the ways 0 to 3 in the selected set, the line data of the way in which a hit occurs.

The selector 36 selects, from within the 32-word line data selected by the selector 35, one word which is indicated by the word index.

The demultiplexor 37 outputs write data to one of the ways 0 to 3, during the writing of data into the cache entry. The write data may be in 1-word units.

The control unit 38 includes a prediction unit 39 and performs the overall control of the cache memory. The prediction unit 39 mainly performs prefetch controlling.

### <Structure of the control unit>

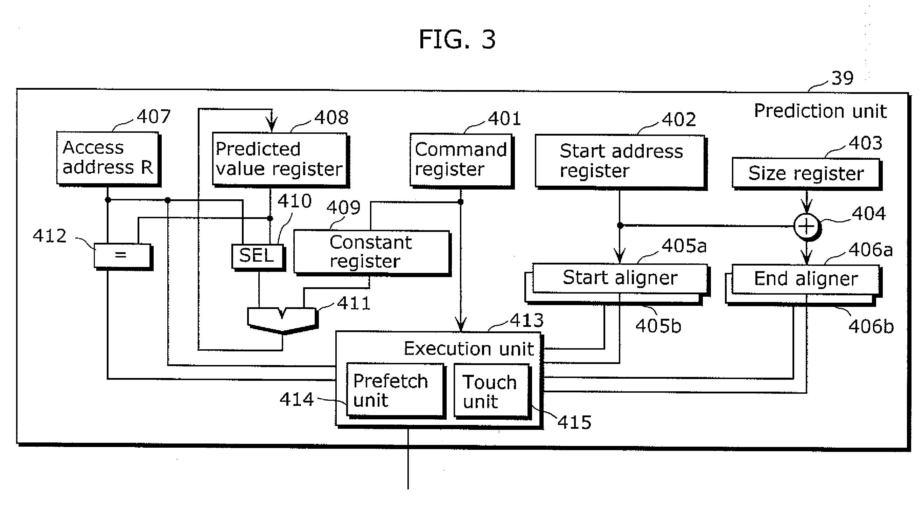

FIG. 3 is a block diagram showing an example of the structure of the prediction unit 39. As in the diagram, the prediction unit 39 includes a command register 401, a start address register 402, a size register 403, an adding unit 404, start aligners 405a and 405b, end aligners 406a and 406b, an access address register 407, a predicted value register 408, a constant register 409, a selector 410, an adding unit 411, a comparator 412, and an execution unit 413.

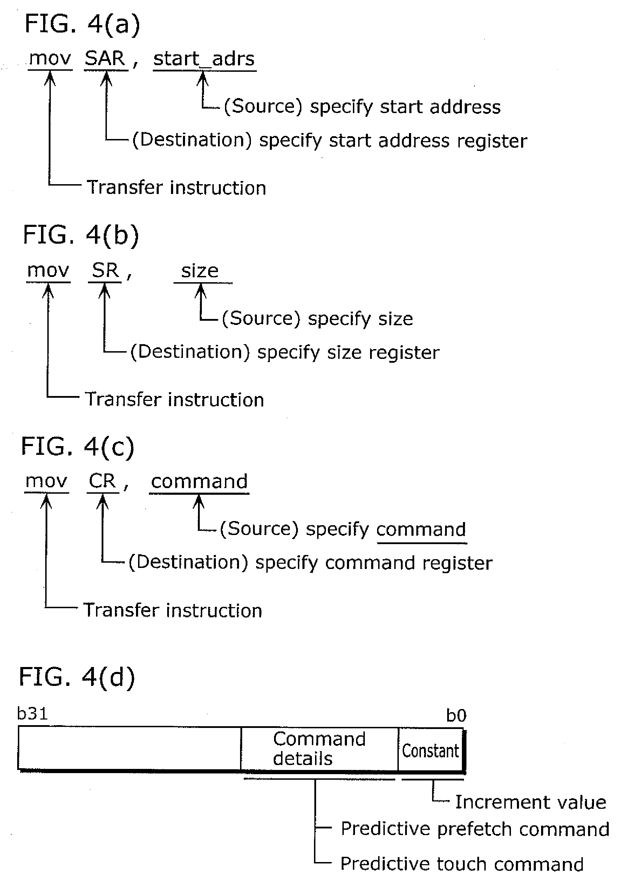

The command register 401 is a register that allows direct access from the processor 1, and holds a command written by the processor 1. FIG. 4(c) shows an example of an instruction to write a command in the command register 401. This instruction is a normal transfer instruction (mov instruction), and specifies the command as a source operand and the command register (CR) 401 as the destination operand. FIG 4(d) shows an example of a command format. This command format includes command details and a constant. The constant, for example, +4, +8, -4, -8, and so on, represents a memory access address increment value or decrement value in the case where the processor 1 performs memory access sequentially. Note that in place of the constant within the command, it is also possible to include an accessing direction (ascending order or descending order of addresses) and an absolute value (difference between addresses, in the case of consecutive access).

The start address register 402 is a register which allows direct access from the processor 1, and holds a start address written by the processor 1. This start address indicates the starting position of an address range on which the C flags (a cleaning flag indicating whether or not caching can be concluded) should be set. FIG. 4(a) shows an example of an instruction for writing a start address into the start address register 402. As in FIG. 4(c), this instruction is also a normal transfer instruction (mov instruction).

The size register 403 is a register which allows direct access from the processor 1, and holds a size which is written by the processor 1. This size indicates an address range starting from the start address. FIG. 4(b) shows an example of an instruction for writing a size into the size register 403. As in FIG. 4(c), this instruction is also a normal transfer instruction (mov instruction). Moreover, the unit of size may be a number of bytes or a number of lines (number of cache entries), as long as it is a unit that is fixed in advance.

The adding unit 404 adds the start address held in the start address register 402 and the size held in the size register 403. The result of this addition is an end address indicating an ending position of the address range. The adding unit 404 adds byte addresses when the size is specified as a number of bytes, and adds line addresses when the size is specified as a number of lines.

The start aligners 405a and 405b adjust a start address to the position of a line boundary. The start aligner 405a adjusts in a direction moving towards the end address, and the start aligner 405b adjusts in a direction moving away from the end address. With these adjustments, the processor 1 can specify an arbitrary address as the start address, regardless of the line size and the line boundary.

The end aligners 406a and 406b adjust an end address to the position of a line boundary. The end aligner 406a adjusts in a direction moving towards the start address, and the end aligner 406b adjusts in a direction moving away from the start address. With this adjustment, the processor 1 can specify an arbitrary size for the aforementioned size, regardless of the line size and the line boundaries.

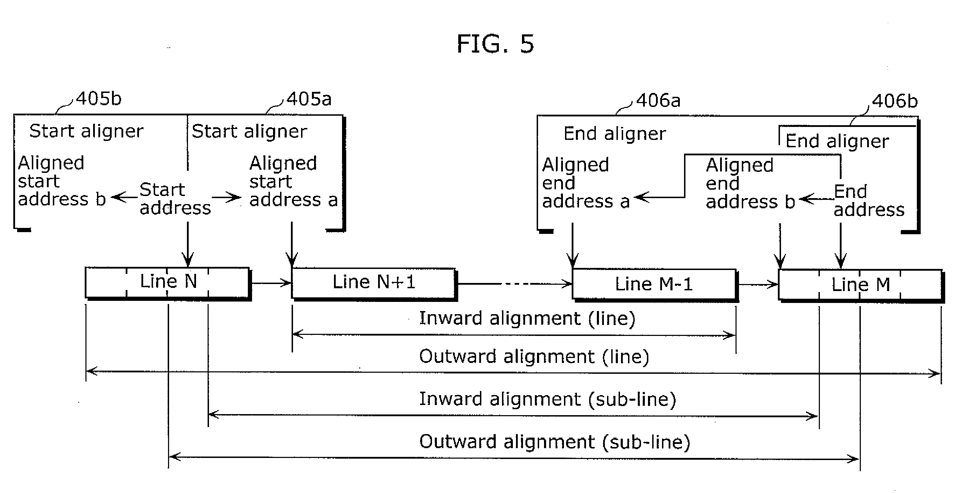

FIG. 5 shows an explanatory diagram for the start aligners 405a and 405b as well as the end aligners 406a and 406b. In the diagram, the start address specified by the processor 1 indicates an arbitrary position midway through a line N. The start aligner 405a makes an adjustment so that the beginning of the next line (N+1) is indicated, and outputs the adjusted address as an aligned start address a. The start aligner 405b makes an adjustment so that the beginning of the line N which includes data of the start address is indicated, and outputs the adjusted address as an aligned start address b. The line indicated by an aligned start address is called a start line.

Furthermore, the end address indicates an arbitrary position midway through a line M. The end aligner 406a makes an adjustment so that the beginning of the immediately preceding line (M-1) is indicated, and outputs the adjusted address as an aligned end address a. The end aligner 406b makes an adjustment so that the beginning of the line M which includes the data of the end address is indicated, and outputs the adjusted address as an aligned end address b. The line indicated by the aligned end address is called an end line.

As in the same diagram, the start aligner 405a and the end aligner 406a perform inward alignment on a per line basis. The start aligner 405b and the end aligner 406b perform outward alignment on a per line basis. Furthermore, after outward alignment and inward alignment on a per line basis, further outward alignment and inward alignment on a per sub-line basis is possible.

The access address register 407 holds a memory access address from the processor 1.

The predicted value register 408 holds, as an initial value for the predicted value, a value resulting from the addition of the memory access address in the access address register 407 and the constant in the constant register 409. Subsequently, in the case where the memory access address in the access address register 407 and the predicted value match when the processor 1 executes a memory access, the predicted value register 408 is updated with a value resulting from the addition of the predicted value and the constant in the constant register 409 as a new predicted value, and is updated with a new initial value in the case of a non-match.

The constant register 409 holds an increment value or decrement value of the memory access address from the processor 1. This increment value (or decrement value) is the increment value (or decrement value) of a post-increment load/store instruction in the case where the processor 1 performs memory access sequentially. For example, it is specified as a constant within the command shown in FIG. 4(d).

The selector 10 selects the predicted value register 408 when the memory access address in the access address register 407 and the predicted value in the predicted value register 408 match, and selects the access address register 407 when they do not match.

The adding unit 411 adds the predicted value or the memory access address selected by the selector 10 and the constant in the constant register 409. The value resulting from the addition is held in the predicted value register 408 as a new predicted value or a new initial value.

The comparator 412 judges whether or not the memory access address in the access address register 407 and the predicted value in the predicted value register 408 match.

The execution unit 413 includes a prefetch unit 414 and a touch unit 415.
The prefetch unit 414 performs predictive prefetching in which the next line to be loaded is estimated in accordance with the progress of the load instructions of the processor, and the estimated line is prefetched.

The touch unit 415 estimates the next line to be stored, in accordance with the progress of the store instructions of the processor, and reserves a cache entry for holding the estimated line, without loading data from the memory (performs setting of V=1, and the setting of a tag).

### <Predictive prefetch>

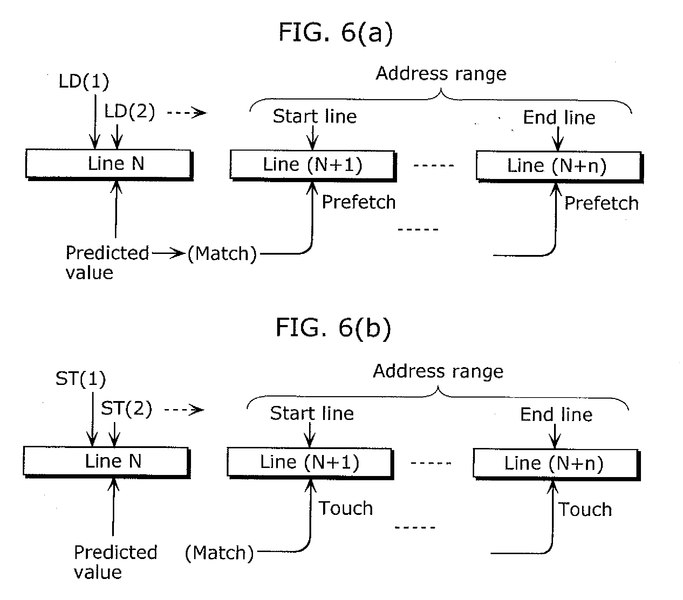

FIG. 6(a) is an explanatory diagram for the predictive prefetching by the prefetch unit 414. In the diagram, line N, N+1,..., N+n are lines having consecutive addresses. The start line and the end line defined by the start address register 402 and the size register 403 are assumed to be the line N+1 and the line N+n respectively. In addition, LD(1), LD(2),...indicate access positions according to the load instructions.

During execution of the first load instruction LD(1), the prefetch unit 414 causes the predicted value register 408 to hold a value resulting from the addition of the constant to the memory access address for such first load instruction LD(1). When, during execution of the second load instruction LD(2), the memory access address for such second load instruction LD(2) matches the predicted value in the predicted value register 408, the prefetch unit 414 estimates it to be a sequential access according to a post-increment load instruction, and prefetches the next line N+1. When the next line is stored in the cache memory, nothing is done.

In the case where sequential accessing is carried out by the processor 1 through post-increment load instructions, with every memory access, the predicted value becomes a match.

In this manner, the predicted value in the predicted value register 208 is updated from the line N up to the line N+1 address and, when it matches the memory access address, the prefetch unit 414 prefetches the line N+2. The prefetch unit 414 executes such predictive prefetching from the start line to the end line and, when prefetching for the end line is concluded, the predictive prefetching concludes.

### <Predictive Touch>

FIG. 6(b) is an explanatory diagram for the predictive touch performed by the touch unit 415. Compared with FIG. 6(a), it is different in that in the case where, during sequential accessing by the processor 1 through store instructions, the memory access address for such access and the predicted value in the predicted value register 408 match, it is estimated to be a sequential access according to post-increment store instructions, and the cache entry corresponding to the next line N+1 is reserved. In other words, it is different in that, in place of prefetching, a tag is set and "1" is set in the valid flag, without loading memory data into the cache entry. Other points are the same as in the predictive prefetch thus their description shall be omitted.

### <Predictive prefetching process>

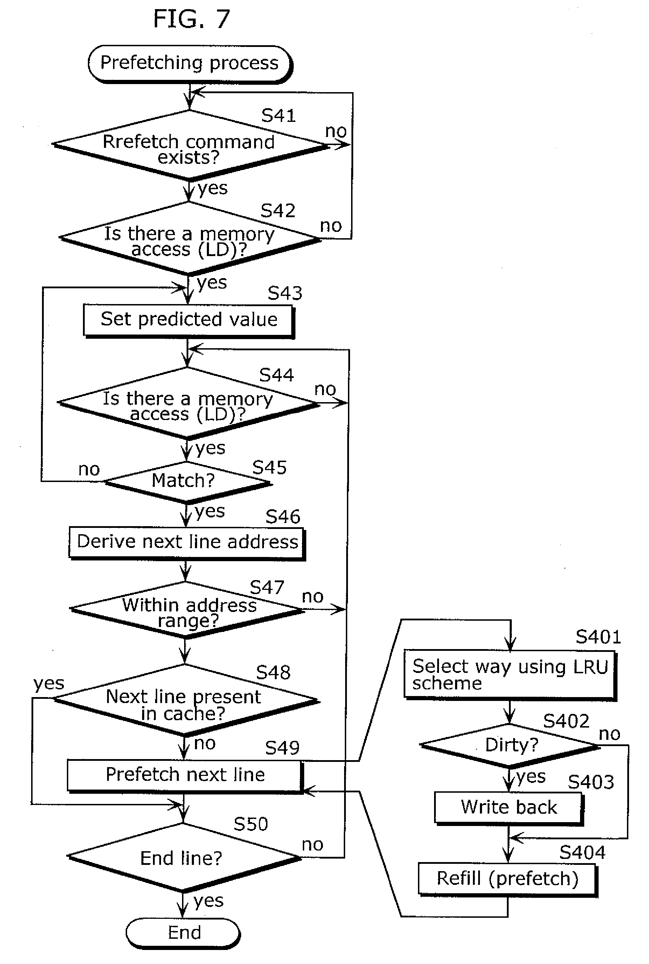

FIG. 7 is a flowchart showing an example of the predictive prefetching by the prefetch unit 414.
In the diagram, when a predictive prefetch command is held in the command register 401 (S41) and the processor executes a load instruction (S42), the prefetch unit 414 sets into the predicted value register 408, a value resulting from the addition of the memory access address and the constant, as an initial value (S43). Naturally, the memory access address for such initial load instruction and the predicted value in the predicted value register 408 do not match. This is because the predicted value register 408 has been cleared, or is holding a random value.

In addition, in the case where the processor executes a load instruction (S44) and its memory access address and the predicted value in the predicted value register match (S45), the prefetch unit 414 derives the line address of the next line (S46). When the derived line address belongs within the address range from the start line to the end line (S47) and the data of the next line is not present in the cache memory (S48), the prefetch unit 414 prefetches the next line (S49).

In this prefetching, the prefetch unit 414 selects, using the LRU scheme, the way to be replaced (S401), performs a write back operation when the cache entry of such way is dirty (S402, S403), and refills (prefetches) the data of the next line into such cache entry (S404).

In addition, the prefetch unit 414 concludes the predictive prefetch process when the prefetched line is the end line (S50).

Furthermore, in the aforementioned S45, in the case where the memory access address and the predicted value in the predicted value register do not match, a value resulting from the addition of the memory access address and the constant is set into the predicted value register 408, as a new predicted value. In addition, in the case of a non-match, nothing further is done (memory access stand-by state).

In this manner, in predictive prefetching, the prefetch unit 414 estimates the next line in accordance with the progress of the processor's load instructions and prefetches the estimated line. Therefore, the processor 1 does not need to be aware of the line size of the cache memory and the line boundaries, in other words, the addresses for prefetching need not be managed by the processor 1. Prefetching can be performed efficiently based on estimation, in the cache memory.

### <Predictive touch process>

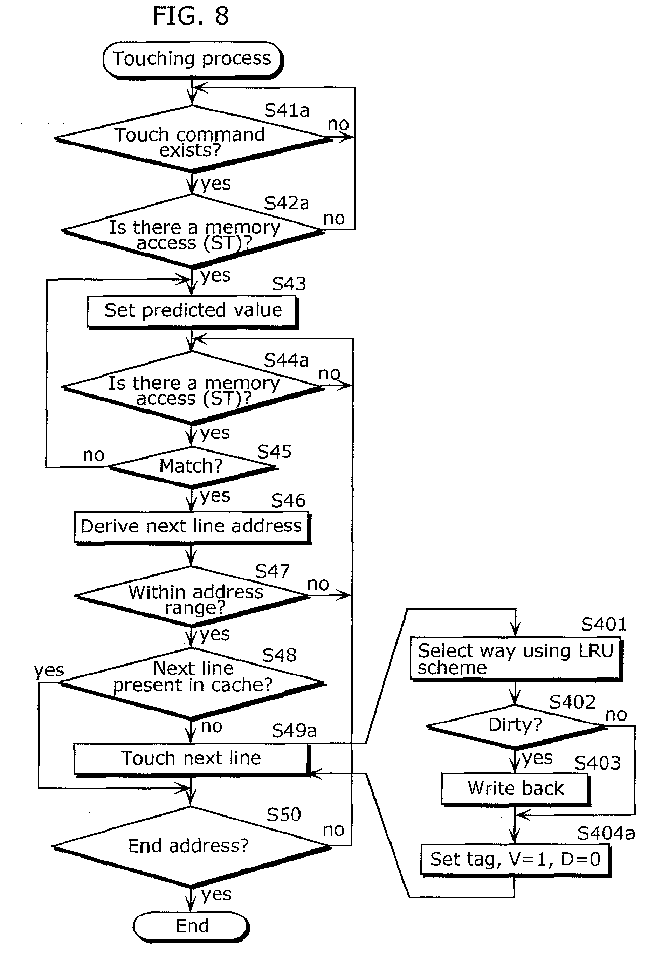

FIG. 8 is a flowchart showing an example of the predictive touching by the touch unit 415. As in the diagram, it is different compared with the predictive prefetching in FIG. 7 in that steps S41a, S42a, S44a, S49a and S404a are included in place of steps S41, S42, S44, S49 and S404 respectively. Since other points are the same, description shall be focused on the points of difference.

The touch unit 415 judges, in S41a, whether or not a predictive prefetch command is held in the command register 401, and judges, in S42a and S44a, whether or not a store instruction is executed. Furthermore, the touch unit 415 performs a touch operation in S49a, in place of prefetching. More specifically, in S404a, the tag is set and the valid flag is set to 1, without loading memory data into the cache entry to be replaced.

In this manner, since the touch unit 415 estimates the next line in accordance with the progress of the processor's store instruction, and performs a touch operation on (reserves) the estimated line, the processor 1 does not need to be aware of the line size of the cache memory and the line boundaries, in other words, the addresses for prefetching need not be managed by the processor 1. It is possible to touch a cache entry efficiently based on estimation, in the cache memory.

### <Variations>

Note that the cache memory in the present invention is not limited to the structure in the aforementioned embodiment, and various types of variations are possible. Hereinafter, a number of variations shall be described.
(1) Although the constant register 409 is shown as being set according to a command, it is also possible to have a structure in which: (a) an increment value or decrement value is held as a default value; (b) the difference of two memory access addresses in plural load/store instructions is derived and stored as an increment value or decrement value; and (c) the aforementioned (b) is derived and stored according to an address direction (ascending address order or descending address order) specified by the processor.
(2) It is also possible to have the prefetch unit 414 prefetch plural lines, such as the next succeeding line after the next line. Likewise, it is also possible to have the touch unit 415 perform touch operations for plural lines.
(3) It is also possible to have the prefetch unit 414 start prefetching when there are plural matches in the comparator 412. This is also possible for the touch unit 415.
(4) Although in the abovementioned embodiment, description is carried out exemplifying a 4-way set-associative cache memory, there may be any number of ways. Likewise, although in the abovementioned embodiment, an example having 16 as the number of sets is described, it is possible to have any number of sets.
(5) Although in the abovementioned embodiment, description is made exemplifying a set-associative cache memory, it is possible to have a fully associative cache memory or a direct map cache memory.
(6) Although in the abovementioned embodiment, the size of a sub-line is made out to be 1/4 of the line size, other sizes such as 1/2, 1/8, 1/16 and so on, are also possible. In such cases, each cache entry may hold the same number of valid flags and dirty flags as the number of sub-lines.
(7) It is also possible to have a structure in which the size register 403 in the aforementioned embodiment holds the number of prefetches required, in place of sizes. In this case, it is possible to have a structure in which the prediction unit 39 counts the actual number of prefetches made, and prefetching is terminated when the count value reaches the number of prefetches required. By counting the number of prefetches in such manner, the progress of a program executed by the processor can be monitored.

### (Second Embodiment)

The first embodiment describes the structure for the case in which a line expected to be accessed henceforth is estimated in the above-described predictive prefetching and predictive touch operations. The present embodiment describes a structure for estimating a line which is thought of as already having been accessed, as well as performing predictive cleaning (write back), predictive weakening (weakening of the access order) and predictive invalidation.

### <Structure of the cache memory>

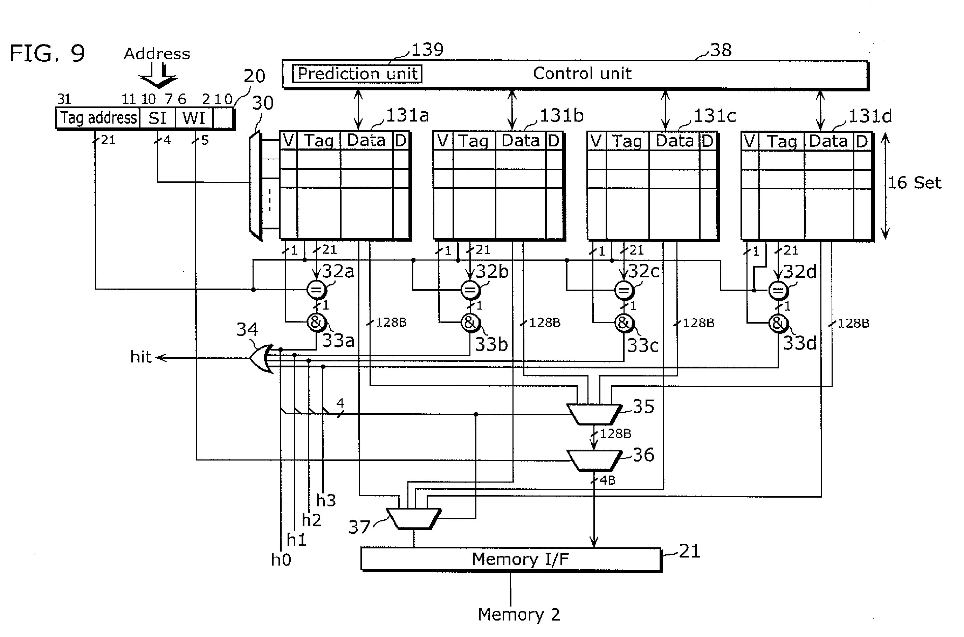

FIG. 9 is a block diagram showing the structure of the cache memory in the second embodiment of the present invention. The cache memory in the diagram is different compared to the structure shown in FIG. 2 in including ways 131a to 131d in place of the ways 31a to 31d, and in including a control unit 138 in place of the control unit 38. Hereinafter, description shall be carried out, omitting the points of similarity, and focusing on the differences.

The way 131a is different compared to the way 31a in having a C flag, a W flag, and a U flag added in each cache entry, in having valid flags V0 to V3 for the respective sub-lines instead of having a valid flag V on a per line basis, and in having dirty flags D0 to D3 for the respective sub-lines instead of having the dirty flag D on a per line basis. The same is true for ways 131b to 131d.

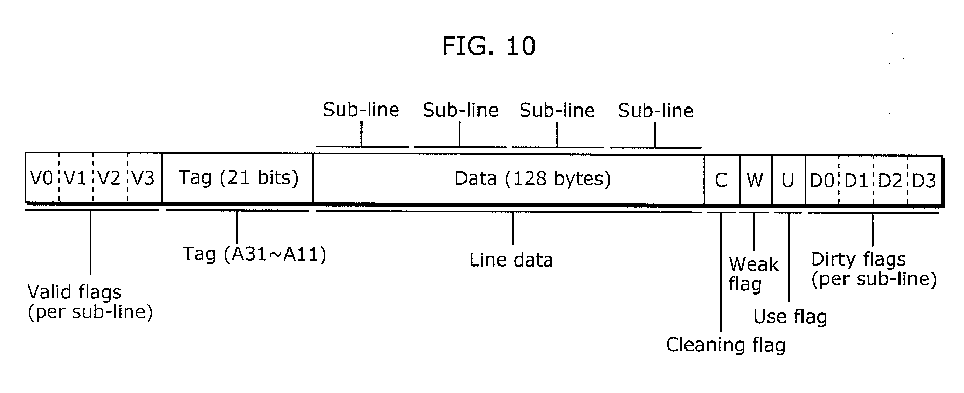

FIG. 10 shows the bit structure of a cache entry. A cache entry holds valid flags V0 to V3, a 21-bit tag, a 128-byte line data, a weak flag W, a use flag U, and dirty flags D0 to D3.

The tag is a copy of a 21-bit address.
Line data is a copy of 128-byte data within a block specified by a tag address or a set index, and is configured of four 32-byte sub-lines.

The valid flags V0 to V3 correspond to the four sub-lines and indicate whether or not the sub-line is valid.

The C flag (cleaning flag) represents a caching termination attribute indicating whether or not caching can be terminated. C=0 means that there is a possibility that a write operation will be carried out from here on. C=1 means that a write operation will not be performed and, when dirty, means that caching should be terminated by cleaning (write back).

The weak flag W indicates whether or not there will be further use with regard to access by the processor, and indicates, with regard to control of replacement in the cache memory, the weakest subject for replacement, which can be evicted first before other cache entries.

The use flag U indicates whether or not there has been an access to the cache entry, and is used in place of the access order data among cache entries in the LRU scheme. More accurately, 1 in the use flag U means an access has been made, and 0 in the use flag means no access has been made. However, when the use flags of the four ways within a set all become 1, they are reset to 0. Stated differently, the use flag U indicates the two relative states of whether the time of access is old or new. In other words, it means that a cache entry with a use flag as 1 has been accessed more recently than a cache entry having a use flag as 0.

The dirty flags D0 to D3 correspond to the four sub-lines, and indicate whether or not a respective sub-line has been written into by the processor, in other words, whether or not a write back is necessary because, although cached data exists in the sub-line, such data is different from the data in the memory due to the write operation.

The control unit 138 is different compared to the control unit 38 in including a prediction unit 139 in place of the prediction unit 39, in setting the C flag according to a prediction, in setting the W flag according to a prediction, and in using the use flag U in place of the access order information in the LRU scheme.

### <Description of the use flag U>

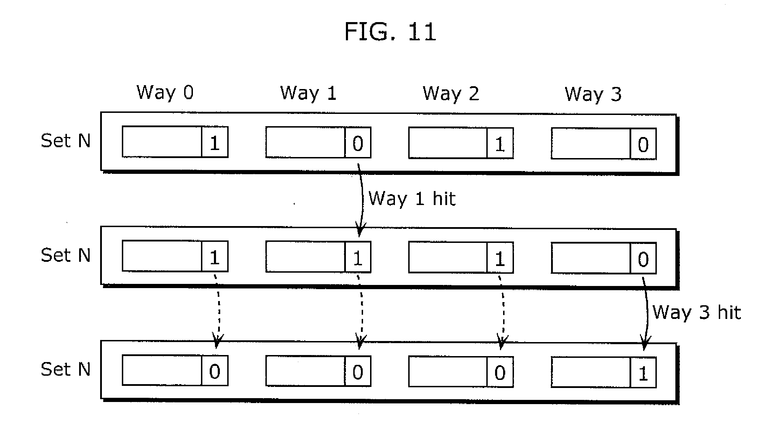

FIG. 11 shows an example of use flag updating by the control unit 138. The upper stage, middle stage, and lower stage in the diagram represent four cache entries making up a set N which straddles the ways 0 to 3. The 1 or 0 at the right end of the four cache entries are respective use flag values. The four use flags U are written as U0 to U3.

In the top stage of the diagram, (U0 to U3) = (1, 0, 1, 0), which means that there was an access to the respective cache entries of the ways 0 and 2, and no access to the respective cache entries of the ways 1 and 3.

In this situation, when a hit occurs in the cache entry of the way 1 within the set N during a memory access, an update (U0 to U3) = (1, 1, 1, 0) is made, as shown in the middle stage in the diagram. More specifically, as shown by the solid line, the use flag U1 of the way 1 is updated from 0 to 1.

In addition, in the situation shown in the middle stage in the diagram, when a hit occurs in the cache entry of the way 3 within the set N during a memory access, an update (U0 to U3) = (0, 0, 0, 1) is made. More specifically, as shown by the solid line, the use flag U1 of the way 3 is updated from 0 to 1. In addition, as shown by the broken lines, the use flags, U0 to U2, other than that for the way 3, are updated from 1 to 0. With this, it means that the cache entry of the way 3 has been accessed more recently than the respective cache entries of the way 0 to 2.

The control unit 138 determines, when a cache entry having W=1 does not exist at the time of a cache miss, the cache entry to be the subject for replacement based on the use flags, and performs the replacement. For example, the control unit 138 determines either one of the way 1 and the way 3 to be the subject for replacement in the upper stage in FIG. 5; determines the way 3 as the replacement subject in the middle stage in FIG. 5; and determines any one of the ways 0 to 2 to be the replacement subject in the lower stage in FIG. 5.

### <Description of the Weak flag>

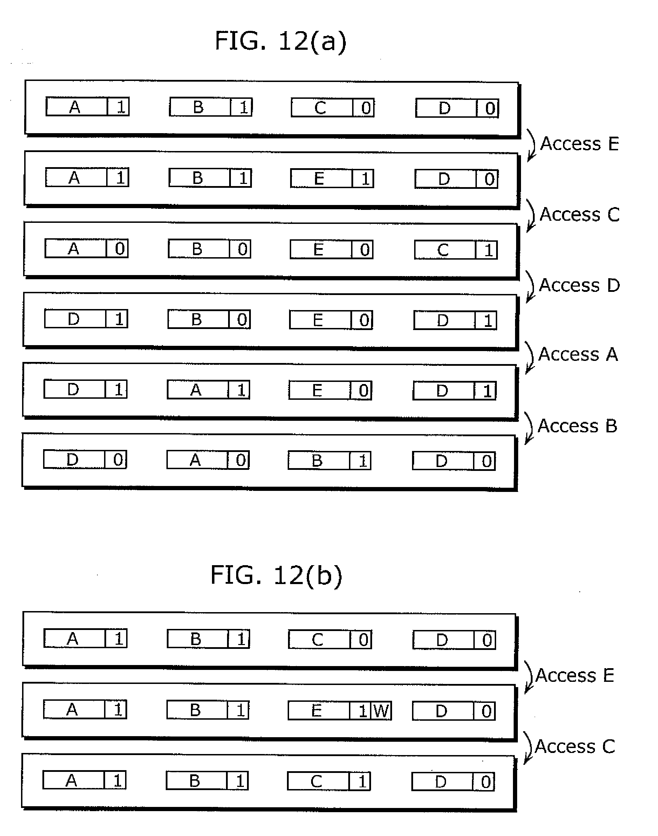

FIG. 12(a) is a comparative example for when a weak flag is assumed not to exist, and is a diagram showing the replacement of a cache entry. The diagram also shows, as in FIG. 11, the four cache entries making up the set N which straddles the ways 0 to 3. The 1 or 0 at the right end of the four cache entries are the values of the respective use flags. Furthermore, it is assumed that only data E is seldom accessed data, and data A, B, C, and D are frequently accessed data.

In the situation in the first stage of FIG. 12(a), a cache miss occurs when the processor 1 accesses the data E. Due to this cache miss, for example, among cache entries having U=0, the cache entry of the frequently accessed data C is replaced with the seldom accessed data E, and the situation in the second stage is arrived at.

In the situation in the second stage, a cache miss occurs when the processor 1 accesses the data C. Due to this cache miss, the cache entry of the frequently accessed data D, which is a cache entry having U=0, is replaced with the frequently accessed data C, and the situation in the third stage is arrived at.

In the situation in the third stage, a cache miss occurs when the processor 1 accesses the data D. Due to this cache miss, for example, the cache entry of the frequently accessed data C is replaced with the frequently accessed data D, and the situation in the third stage is arrived at.

Likewise in the fourth stage, the seldom used data E is not selected as the subject for replacement, and is left in the cache memory.

In the situation in stage 5, since the seldom used data E is the oldest (U=0), it is selected as the subject for replacement, and is evicted.

In this manner, in the pseudo-LRU scheme (likewise, in the normal LRU scheme), there are cases where, at worst, a cache miss is induced four times when there are four ways, due to the seldom accessed data E.

FIG. 12(b) is an explanatory diagram showing the role of the weak flag W in the replacement process.

In the situation in the first stage in FIG. 12(b) (same as the first stage in FIG. 12(a), a cache miss occurs when the processor 1 accesses the data E. Due to this cache miss, for example, among the cache entries having U=0, the cache entry of the frequently accessed data C is replaced with the seldom accessed data E. At this time, it is assumed that the processor 1 sets a weak flag W as 1 in the cache entry of data E. With this, the cache entry of the data E is the first to be evicted during a cache miss, and the situation in the second stage is arrived at.

In the situation in the second stage, a cache miss occurs when the processor 1 accesses the data C. Due to this cache miss, the cache entry of the seldom accessed data E, which is the cache entry having W=1, is selected as the subject for replacement, and is replaced with the frequently used data C, and the situation in stage 3 is arrived at.

In this manner, by providing a weak flag, it is possible to reduce the inducement of cache misses, due to seldom accessed data.

### <Structure of the prediction unit>

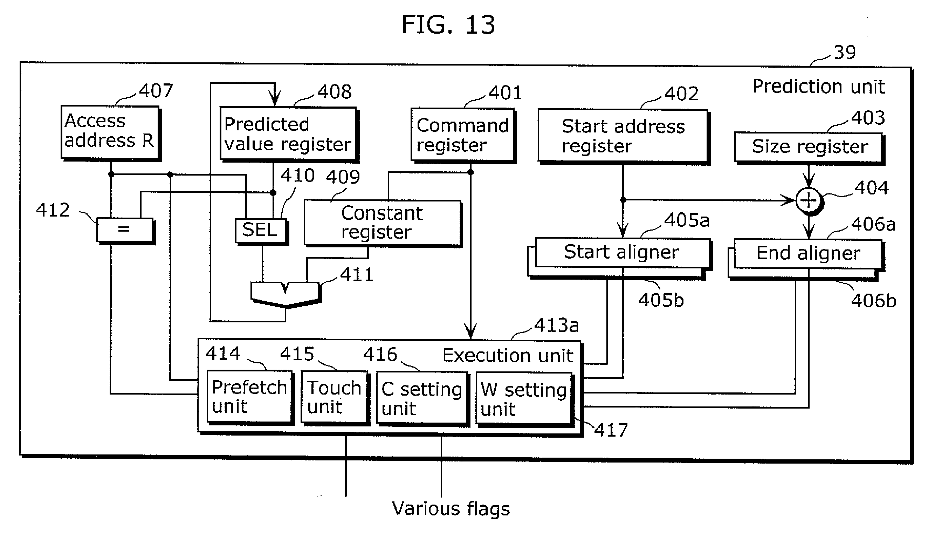

FIG. 13 is a block diagram showing the structure of the prediction unit 139. The prediction unit 139 in the diagram is different from the prediction unit 39 in including an execution unit 413a instead of the execution unit 413. Compared with the execution unit 413, the execution unit 413a has been added with a C setting unit 416 and a W setting unit 417.

The C setting unit 416 estimates, in accordance with the progress of the processor's store instructions, the immediately preceding line in which storing has concluded, and sets the C flag of the estimated line to 1.

The W setting unit 417 estimates, in accordance with the progress of the processor's store instructions, the immediately preceding line in which storing has concluded, and sets the W flag of the estimated line to 1.

### <Explanatory diagram of the C flag setting process>

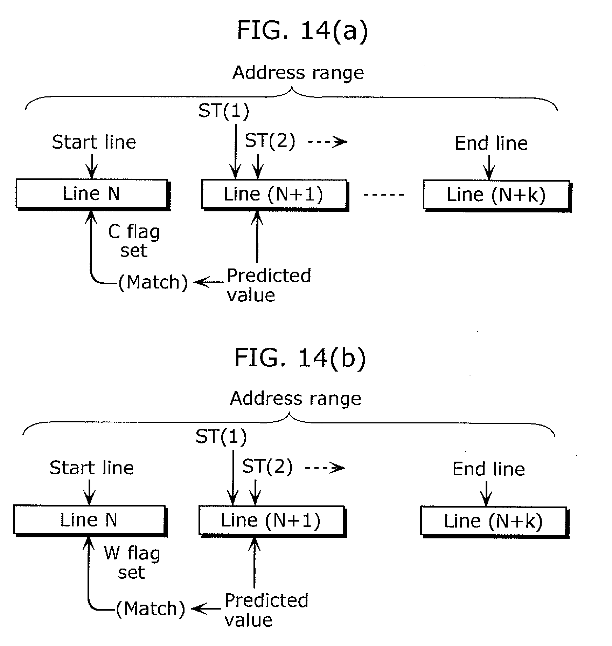

FIG. 14(a) is an explanatory diagram for the C flag setting by the C setting unit 416. In diagram 14(a), lines N, N+1,..., N+n, the start line, and the end line are the same as in FIG. 6(a).

In the case where, for example, store instructions ST(1) and ST(2) are executed with respect to line N+1, and the memory access address for ST(2) and the predicted value match, the C setting unit 416 estimates that the storing according to sequential accessing to line N has concluded, and sets the C flag of line N to 1. Line N with a C flag set to 1 is written back by cleaning, without waiting for the occurrence of a cache miss.

In the same manner, in the case where the predicted value matches during the execution of a store instruction for line N+2, it is estimated that storing according to a sequential accessing to line N+1 has concluded, and the C flag of line N+1 is set to 1.

In this manner, the C setting unit 416 executes the setting of C flags from the start line to the end line.

### <Explanatory diagram for the W flag setting process>

FIG. 14(b) is an explanatory diagram for the W flag setting by the W setting unit 417. It is different compared to FIG. 14(a) only in the setting of a W flag in place of the C flag. As all other points are the same, description shall be omitted.

A line having a W flag set to 1 is the first to be selected, as the subject for replacement, and evicted from the cache memory during the occurrence of a cache miss.

### <C flag setting process flow>

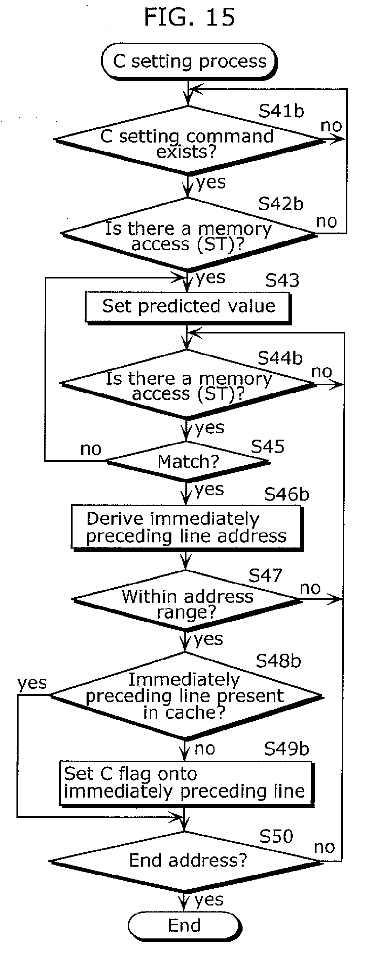

FIG. 15 is a flowchart showing an example of the C flag setting by the C setting unit 416.
In the diagram, when a C flag setting command is held in the command register 401 (S41b) and the processor executes a store instruction (S42b), the C setting unit 416 sets into the predicted value register 408, a value resulting from the addition of the memory access address and the constant, as an initial value (S43). Naturally, the memory access address for such initial store instruction and the predicted value in the predicted value register 408 do not match. This is because the predicted value register 408 has been cleared, or is holding a random value.

In addition, in the case where the processor executes a store instruction (S44b) and its memory access address and the predicted value in the predicted value register match (S45), the C setting unit 416 derives the line address of the immediately preceding line (S46b). When the derived line address belongs to the address range from the start line to the end line (S47) and the data of the immediately preceding line is present in the cache memory (S48b), the C setting unit 416 sets the C flag of the immediately preceding line to 1 (S49b).

In addition, the C setting unit 416 concludes the C flag setting process when the immediately preceding line is the end line (S50).

In this manner, the C setting unit 416 estimates, in accordance with the progress of the processor's store instructions, the immediately preceding line in which storing has concluded, and sets the C flag of the estimated line to 1. Therefore, the processor 1 does not need to be aware of the line size of the cache memory and the line boundaries, in other words, the line on which cleaning can be performed need not be managed, as a line address, by the processor 1. It is possible to perform cleaning efficiently based on estimation, in the cache memory.

### <W flag setting process flow>

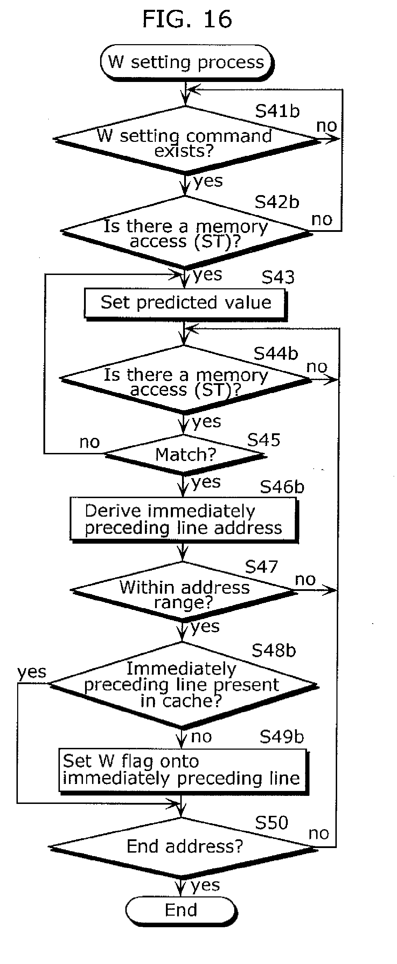

FIG. 16 is a flowchart showing an example of the W flag setting by the W setting unit 417. The flow in the diagram is different compared to that in the C flag setting process in FIG. 15 in that a W flag is set in place of the C flag. Since all other points are the same, description shall be omitted.

In this manner, the W setting unit 417 estimates, in accordance with the progress of the processor's store instruction, the immediately preceding line in which storing has concluded, and sets the W flag of the estimated line to 1. Therefore, based on estimation, the immediately preceding line in which storing has concluded can be efficiently assumed as the subject for replacement in the cache memory. At this time, the processor 1 does not need to be aware of the line size of the cache memory and the line boundaries, in other words, the line that may be replaced need not be managed, as a line address, by the processor 1.

### <Cleaning process>

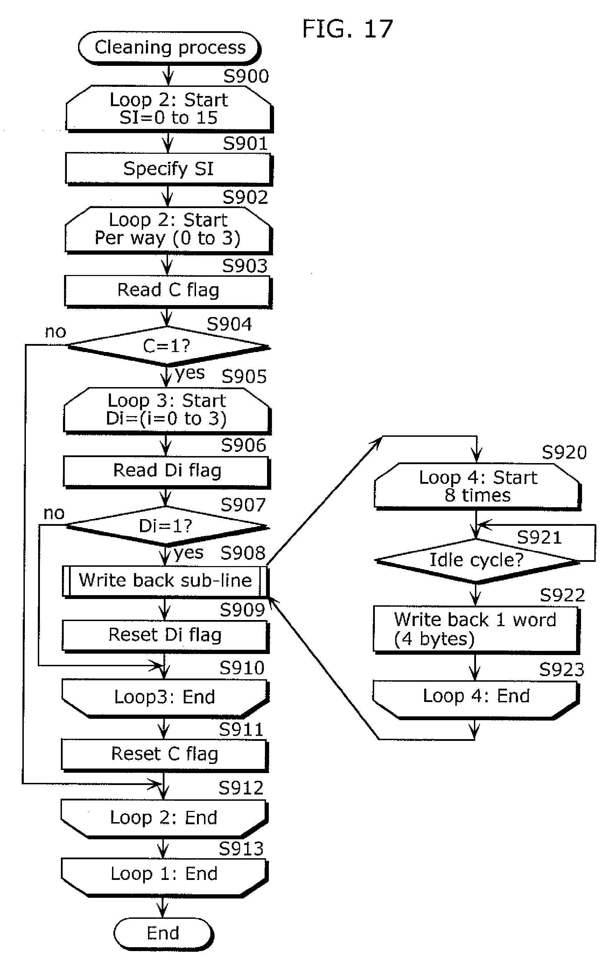

FIG. 17 is a flowchart showing an example of the cleaning process by the control unit 138.
As in the diagram, by sequentially specifying set indices (SI) 0 to 15 (S901) in the loop 1 processing (S900 to S913), the control unit 138 performs loop 2 processing on all the 16 sets. By reading the respective C flags of the ways 0 to 3 within a set (S903) in the loop 2 processing (S900 to S913), the control unit 138 searches for a cache entry having C=1 (S904). In loop 3 processing (S905 to S910), the control unit 138 reads, on a per sub-line basis, dirty flags of the cache entry having C=1 (S906), and when dirty (S907), writes back, to the memory 2, the data of such sub-line (S908) and resets the dirty flag of such sub-line to 0 (S909). In the write back of such sub-line data, the control unit 138 writes back, in an idle cycle (S920), one word at time (S922), as in loop 4 processing (S920 to S923).

In this manner, in the cleaning process, a cache entry having a C flag indicating that writing will no longer be performed is written back before a cache miss occurs. Therefore, during a cache miss, only a load penalty occurs and the occurrence of a write back penalty can be reduced. With this, it is possible to improve cache memory efficiency, and improve access speed.

### <U flag updating process>

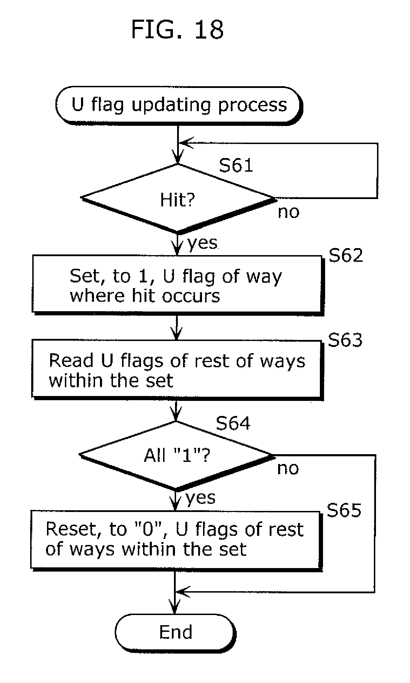

FIG. 18 is a flowchart showing the U flag updating by the control unit 138. In the diagram, it is assumed that the use flag U of a cache entry having a valid flag as 0 (invalid) is initialized to 0.

In the diagram, when a cache hit occurs (Step S61), the control unit 138 sets, to 1, the use flag U of the way, in the set selected according to the set index, in which the hit occurred (Step S62), reads the use flags U of the rest of the ways in such set (Step S63), and judges whether or not the read use flags U all indicate 1 (Step S64). When all do not indicate 1, the process is concluded and, when all indicate 1, all the use flags U of the rest of the ways are reset to 0 (Step S65).

In this manner, the control unit 138 updates the use flag U as in the example of updating shown in FIG. 11 and FIG. 12(a) and (b).

### <Replacement process>

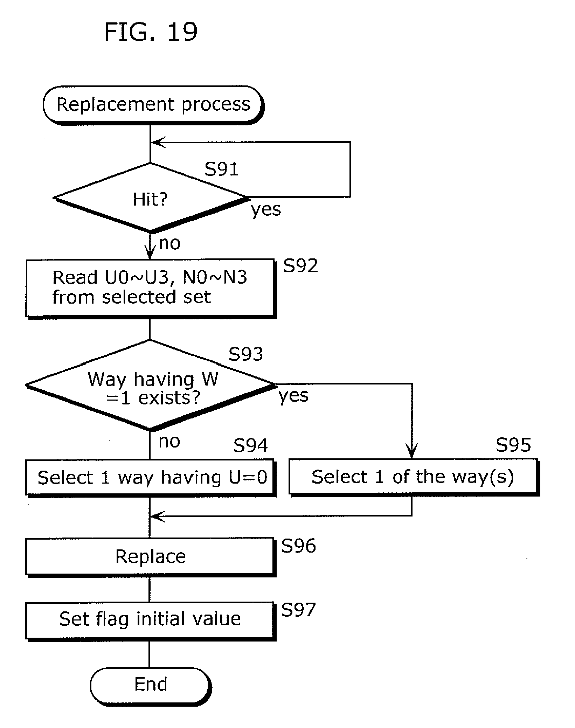

FIG. 19 is a flowchart showing the replacement by the control unit 138. In the diagram, when a miss occurs in a memory access (Step S91), the control unit 138 reads the use flags U and the weak flags W of the four ways in the set selected according to the set index (Step S92), and judges whether or not a way having W=1 exists (Step S93). When it is judged that there is no way having W=1, one way having U=0 is selected (Step S94). At this time, when there is a plurality of ways having use flags as 0, the control unit 138 randomly selects one. Furthermore, when it is judged that a way having W=1 exists, one way having W=1 is selected regardless of the U flag value (Step S95). At this time, when there is a plurality of ways having a weak flag W as 1, the control unit 138 randomly selects one.

In addition, the control unit 138 performs replacement, with the cache entry of the selected way in such set as the subject (Step S96) and, after replacement, initializes the use flag U and the weak flag W of such cache entry to 1 and 0 respectively (Step S97). Moreover, at this time, the valid flag V and the dirty flag D are initialized to 1 and 0 respectively.

In this manner, when a way having W=1 does not exist, one among cache entries having a use flag U as 0, is selected as the subject for replacement.

Furthermore, when a way having W=1 exists, one among cache entries of ways having W=1, is selected as the subject for replacement, regardless of whether the use flag indicates 0 or 1. With this, it is possible to reduce the inducement of cache misses due to seldom accessed data being left in the cache memory, as shown in FIG. 14(a) and (b).

As described thus far, according to the cache memory in the present embodiment, a line in which storing has been concluded is estimated based on the progress of the store instruction of the processor 1, and the C flag or the W flag of the estimated line is set. Therefore, an immediately preceding line in which storing has been concluded can be efficiently specified as the subject for replacement. At this time, the processor 1 does not need manage the line boundaries and line sizes of the cache memory, and the load for cache management can be reduced.

Furthermore, by cleaning a line having a weak flag of W=1 and a dirty flag as 1, as a line which will no longer be written into by the processor, write back penalties during a cache miss can be reduced.

Furthermore, since W=1 is set to a cache entry that will no longer be used, and such cache entry having W=1 is selected first as the subject for replacement, it is possible to reduce the inducement of cache misses due to seldom accessed data being left in the cache memory.

Furthermore, since a 1-bit flag becomes sufficient as access order data through the adoption of a pseudo-LRU scheme using a 1-bit use flag in place of the data indicating the access order in the conventional LRU scheme, hardware dimensions can be made smaller as the data volume of the access order data is small and updating is simple.

### <Variations>

(1) It is also possible for the respective commands shown in FIG. 4(a), (b) and (c) to be inserted within a program, by a compiler. At that time, the compiler may insert the aforementioned respective instructions in a position in the program which will not be performed of further write operations such as the writing of array data, the writing of block data during the decoding of compressed video data, and the like.
(2) It is also possible to have a structure in which invalidation is performed in the aforementioned cleaning process. More specifically, it is possible to further add, in the flowchart shown in FIG. 17, a step which invalidates (resets the V flag) the relevant memory access address in the case where a judgment of not dirty is made in S907. In addition, it is also possible to add an invalidating step after the write back in the cleaning process.

### Industrial Applicability

The present invention is suitable as a cache memory for facilitating high-speed memory access, and is suitable, for example, as an on-chip cache memory, an off-chip cache memory, a data cache memory, an instruction cache memory, and the like.

## Claims

1. A cache memory system comprising:
a condition generation unit operable to generate a condition concerning a state of a processor;
a judgment unit operable to judge whether or not a current state of the processor satisfies the condition;
an address generation unit operable to generate an address to be manipulated; and
a manipulation unit operable to manipulate a cache using the address generated by said address generation unit, when said judgment unit judges that the condition is satisfied.

2. The cache memory system according to Claim 1,
wherein said condition generation unit is operable to generate a new condition in the case where said judgment unit judges that the condition is satisfied.

3. The cache memory system according to Claim 2,
wherein said condition generation unit is operable to generate a condition concerning a value of a specific register, within the processor.

4. The cache memory system according to Claim 3,
wherein the specific register is a program counter.

5. The cache memory system according to Claim 2,
wherein said condition generation unit is operable to generate, as the condition, one of memory access within a specific address range and memory access outside of the specific address range.

6. The cache memory system according to Claim 1,
wherein said condition generation unit is operable to generate, as the condition, execution of a specific instruction by the processor.

7. The cache memory system according to Claim 2,
wherein said condition generation unit is operable to generate the new condition by performing a specific calculation on a current condition.

8. The cache memory system according to Claim 7,
wherein said condition generation unit is operable to:
generate a memory access address as the condition; and
generate the new condition by adding a constant to the current condition in the case where said judgment unit judges that the condition is satisfied.

9. The cache memory system according to Claim 8,
wherein the constant is one of: an increment value or decrement value in a post-increment load/store instruction executed by the processor; and a difference value of addresses in two load/store instructions executed by the processor.

10. The cache memory system according to Claim 1,
wherein said condition generation unit is operable to generate plural conditions, and
said judgment unit is operable to judge whether or not all of the plural conditions are satisfied.

11. The cache memory system according to Claim 1,
wherein said condition generation unit is operable to generate plural conditions, and
said judgment unit is operable to judge whether or not any of the plural conditions are satisfied.

12. The cache memory system according to any of Claim 1 through Claim 3,
wherein said manipulation unit includes:
a data judgment unit operable, in the case where said judgment unit judges that the condition is satisfied, to judge whether or not data corresponding to the address generated by said address generation unit is stored in the cache;
a selection unit operable to select a line within the cache memory in the case where it is judged that the data is not stored;
a write back unit operable to perform a write back from the selected line when the selected line is valid and dirty;
a transfer unit operable to transfer, from a memory to the selected line after the write back, the data corresponding to the address; and
a registration unit operable to register the address as a tag, to the selected line.

13. The cache memory system according to any of Claim 1 through Claim 3,
wherein said manipulation unit includes:
a data judgment unit operable, in the case where said judgment unit judges that the condition is satisfied, to judge whether or not data corresponding to the address generated by said address generation unit is stored in the cache;
a selection unit operable to select a line within the cache memory in the case where it is judged that the data is not stored;
a write back unit operable to perform a write back from the selected line when the selected line is valid and dirty;
a registration unit operable to register the generated address as a tag, to the selected line, without transferring data from a memory to the selected line.

14. The cache memory system according to any of Claim 1 through Claim 3,
wherein said manipulation unit includes:
a data judgment unit operable, in the case where said judgment unit judges that the condition is satisfied, to judge whether or not data corresponding to the address generated by said address generation unit is stored in the cache;
a selection unit operable, in the case where it is judged that the data is stored, to select a line, within the cache memory, in which the data is stored;
a write back unit operable to perform a write back from the selected line when the selected line is valid and dirty.

15. The cache memory system according to any of Claim 1 through Claim 3,
wherein said manipulation unit includes:
a data judgment unit operable, in the case where said judgment unit judges that the condition is satisfied, to judge whether or not data corresponding to the address generated by said address generation unit is stored in the cache;
a selection unit operable, in the case where it is judged that the data is stored, to select a line, within the cache memory, in which the data is stored;
an invalidation unit operable to invalidate the selected line.

16. The cache memory system according to any of Claim 1 through Claim 3,
wherein said manipulation unit includes:
a data judgment unit operable, in the case where said judgment unit judges that the condition is satisfied, to judge whether or not data corresponding to the address generated by said address generation unit is stored in the cache;
a selection unit operable, in the case where it is judged that the data is stored, to select a line, within the cache memory, in which the data is stored;
a change unit operable to change an access order of the selected line in order information indicating an order in which lines are accessed.

17. The cache memory system according to any of Claim 12 through Claim 16,
wherein said condition generation unit is operable to generate a memory address as the condition, and
said manipulation unit further includes
an adjustment unit operable, in the case where the memory address generated by said condition generation unit indicates a point midway through a line, to generate an address by adjusting so that one of a starting point of the line, a starting point of a next line, and a starting point of an immediately preceding line is indicated.

18. A cache memory control method comprising:
a condition generation step of generating a condition concerning a state of a processor;
a judgment step of judging whether or not a current state of the processor satisfies the condition;
an address generation step of generating an address to be manipulated; and
a manipulation step of manipulating a cache using the address generated in said address generation step, when it is judged in said judgment step that the condition is satisfied.
